Europäisches Patentamt

European Patent Office

Office européen des brevets

(19)

(11) EP 1 117 262 A2

(12) EUROPEAN PATENT APPLICATION

(43) Date of publication:
18.07.2001 Bulletin 2001/29

(51) Int Cl.$^7$: H04N 7/26, H04N 7/50

(21) Application number: 00311769.4

(22) Date of filing: 29.12.2000

(84) Designated Contracting States:
AT BE CH CY DE DK ES FI FR GB GR IE IT LI LU
MC NL PT SE TR
Designated Extension States:
AL LT LV MK RO SI

(30) Priority: 11.01.2000 JP 2000002957
22.12.2000 JP 2000391204

(71) Applicant: CANON KABUSHIKI KAISHA
Tokyo (JP)

(72) Inventors:
• Ohsawa, Hidefumi, c/o Canon Kabushiki Kaisha
Tokyo (JP)
• Itokawa, Osamu, c/o Canon Kabushiki Kaisha
Tokyo (JP)

(74) Representative:
Beresford, Keith Denis Lewis et al
BERESFORD & Co.
High Holborn
2-5 Warwick Court
London WC1R 5DJ (GB)

(54) Image, processing apparatus and method, and storage medium

(57) This invention provides an image processing apparatus and method characterized by inputting successive image data, detecting a change in the image data, generating initial contour information for extracting an object present in the image data in accordance with the detection result, and extracting object image data corresponding to the object on the basis of the generated initial contour information.

FIG. 1

**Description**

BACKGROUND OF THE INVENTION

Field of the Invention

The present invention relates to an image processing apparatus and method and a storage medium and, more particularly, to image processing of separating an object portion and background portion from an image picked up by a video camera or the like, or automatically cutting a contour portion of an object in a moving picture.

Related Background Art

Conventionally, an image processing method of separating a input object (to be referred to as an "object" hereinafter) and background portion from a input image obtained by a video camera or the like, or cutting the contour portion of an object in a moving picture includes a method using a blue matter process or the like as a background in image pickup, a method of manually performing separation/cutting work, and a method of automatically performing separation/cutting work.

These conventional image processing methods propose various methods for a method of automatically separating or cutting an object portion from a target image (to be simply referred to as an "automatic separation method" hereinafter). However, these methods suffer problems such as a long processing time and generation of various errors, and thus an object portion cannot be accurately separated or cut.

For example, there is proposed an automatic separation method using an object contour tracking method, as described in, e.g., Hidehiko Mino, "SNAKES: Present, Past, and Future", Technical Report of IEICE, PRMU97-184 (1997-12). According to this method, the processing time is short, but data of the initial contour of an object must be manually input, and a newly appeared object is difficult to track.

There is also proposed a method of generating data of the initial contour of an object by area division, and tracking the contour of the object on the basis of the data of the initial contour. This method cannot shorten the processing time, either.

SUMMARY OF THE INVENTION

The present invention has been made in consideration of the above situation, and has as a concern to provide an image processing apparatus and method capable of automatically separating or cutting a target object from image data efficiently, accurately, and a storage medium which stores an image processing program.

According to one aspect of the present invention, there is provided an image processing apparatus and method which are characterized by inputting successive image data, detecting a change in the image data, generating initial contour information for extracting an object present in the image data in accordance with a detection result, and extracting object image data corresponding to the object on the basis of the generated initial contour information.

According to another aspect of the present invention, there is provided a storage medium which is characterized by storing a code of the input step of inputting successive image data, a code of the detection step of detecting a change in the image data, a code of the generation step of generating initial contour information for extracting an object present in the image data in accordance with a detection result of the detection step, and a code of the extraction step of extracting object image data corresponding to the object on the basis of the initial contour information generated in the generation step.

Other features and advantages of the invention will become apparent from the following detailed description taken in conjunction with the accompanying drawings.

BRIEF DESCRIPTION OF THE DRAWINGS

Fig. 1 is a block diagram showing the schematic arrangement of an image processing apparatus according to an embodiment of the present invention;
Fig. 2 is a flow chart for explaining processing operation of a determination unit 120 in Fig. 1;
Fig. 3 is a view for explaining generation processing of initial contour information according to the embodiment;
Fig. 4 is a view for explaining another generation processing of initial contour information according to the embodiment;
Fig. 5 is a block diagram showing the arrangement of a coding unit 150;

Fig. 6 is a block diagram showing the arrangement of an image reconstruction apparatus according to the embodiment; and

Figs. 7A, 7B and 7C are views for explaining another determination operation of the determination unit 120.

DESCRIPTION OF THE PREFERRED EMBODIMENT

A preferred embodiment of the present invention will be described in detail below with reference to the accompanying drawings.

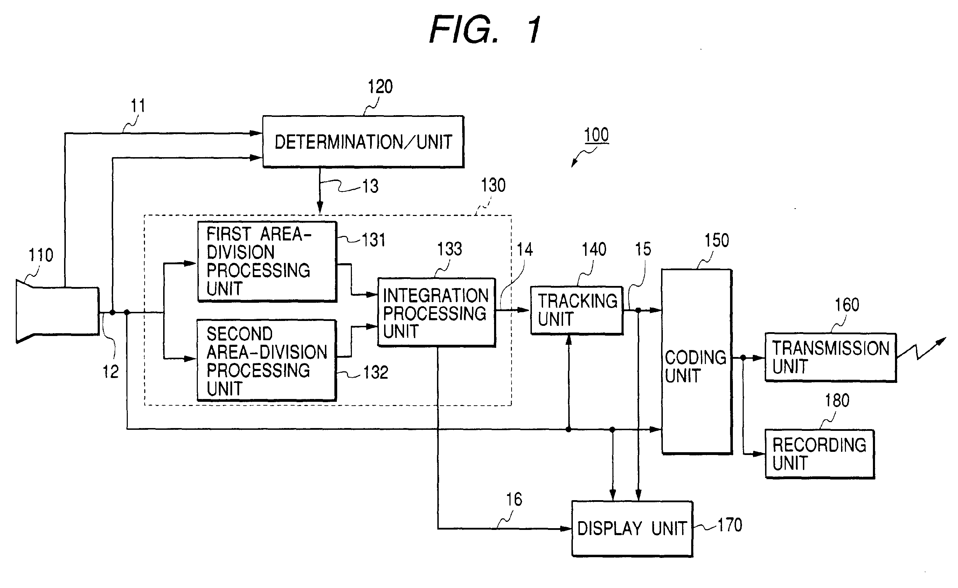

Fig. 1 is a block diagram showing the functional arrangement of an image processing apparatus according to the present invention.

An image processing apparatus 100 has a function of separating an object portion and background portion from image data 12 picked up by a video camera, independently coding the object portion and background portion, and transmitting the coded data to an external device.

In Fig. 1, the image processing apparatus 100 comprises a camera unit 110 for picking up an object image and outputting image data, a determination unit 120 for determining whether to acquire (search) initial contour information, an information generation unit 130 for generating initial contour information 14 on the basis of the determination result (determination information 13) of the determination unit 120, a tracking unit 140 for tracking the object on the basis of the initial contour information 14 to generate shape data 15 of the object, a coding unit 150 for coding image data 12 using the shape data 15 in units of objects complying with MPEG-4 (ISO/IEC 14496), a transmission unit 160 for transmitting the image data coded by the coding unit 150 to an external device via the Internet, a display unit 170 for allowing the user to confirm the tracking result of the tracking unit 140 or a input image, and a recording unit 180 for recording the image data coded by the coding unit 150 on a recording medium such as a hard disk, memory, or CD-ROM.

The display unit 170 can display an image obtained by masking the object portion based on shape data from the tracking unit 140, or display an emphasized contour portion of the object portion.

The determination unit 120 detects, e.g., a scene change from a target image, and outputs based on the detection result the determination information 13 representing whether to acquire initial contour information.

The information generation unit 130 contains a first area-division processing unit 131 for performing area division processing of a target image based on the color and texture, a second area-division processing unit 132 for performing area division processing of a target image based on motion information, and an integration processing unit 133 for integrating pieces of information obtained by the first and second area-division processing units 131 and 132.

The first area-division processing unit 131 divides a target image into areas on the basis of the color and texture of input image data. The second area-division processing unit 132 detects motion information (motion vector) from the input image data, and divides the target image into areas on the basis of the motion information.

The unit of area division processing by the first area-division processing unit 131 is smaller than that of area division processing by the second area-division processing unit 132.

The integration processing unit 133 generates and outputs the contour (initial contour information 14) of an area provided by integrating areas represented by pieces of information obtained by the first and second area-division processing units 131 and 132 on the basis of the detection information 13 from the determination unit 120.

The integration processing unit 133 can supply to the display unit 170 mask information 16 prepared by executing mask processing for information within the contour (e.g., converting an image into a black or gray image).

The display unit 170 can display the mask information over the image data 12 to allow the user to recognize how the initial contour has been extracted.

The tracking unit 140 tracks a target object in the time axis direction on the basis of the initial contour information 14 obtained by the integration processing unit 133 of the information generation unit 130 or initial contour information detected from a past frame.

As a tracking method, this embodiment adopts energy minimization of an active contour model called snakes. (Snakes are described in, e.g., Michael Kass, Andrew Witkin, and Demetri Terzopoulos, "Snakes: Active Contour Models", International Journal of Computer Vision, Vol. 1, No. 3, pp. 321 - 331, 1988).

Snakes are a technique of defining an energy function which minimizes when a contour is extracted, and calculating the minimal solution from a proper initial value by iterative calculation. The energy function is defined by the linear sum of external energy serving as a constraint of passing an edge point, and internal energy serving as a smoothness constraint.

To apply snakes, the contour of an object to be extracted must be roughly designated. The initial contour is set by the above-mentioned initial contour extraction method. In addition, an initial contour must be set for each frame. In this embodiment, the extraction result of a previous frame is used as the initial value of the current frame while no scene change is detected.

In general, snakes are a contour extraction model obtained by rewriting a contour (closed curve) expressed by a parameter on an image plane (x,y):

v(s) = (x(s),y(s))

where $0 \leq s \leq 1$

so as to minimize an energy function defined by the following equation (1), and determining the shape as the minimum energy state:

$$Esnake(v(s)) = \int_0^1 (Eint(v(s)) + Eimage(v(s)) + Econ(v(s)))\,ds \quad \cdots(1)$$

$$Espline(v(s)) = \frac{1}{2}\{\alpha \cdot (v'(s))^2 + \beta \cdot (v''(s))^2\} \tag{2}$$

$$Eedge(v(s)) = -\frac{1}{2}\gamma\,|\nabla I(v(s))|^2 \tag{3}$$

where Eint is the internal energy, Eimage is the image energy, and Econ is the external energy. Econ is used to forcibly act force on snakes from the outside. The external energy is used as needed.

In many cases, Espline given in equation (2) expressing the smoothness of a contour is used for Eint. v'(s) and v''(s) are a first derivative and second derivative, respectively. α and β are weighting coefficients. α and β are generally functions of s, but are constants in this case. By minimizing Espline, snakes receive a force of shrinking smoothly.

Eedge given in equation (3) defined using a luminance 1(v(s)) of an image is often used for Eimage. Eedge represents the magnitude of the luminance gradient. By minimizing Eedge, snakes receive a force of attracting the snakes to an edge. γ is a weighting coefficient for image energy.

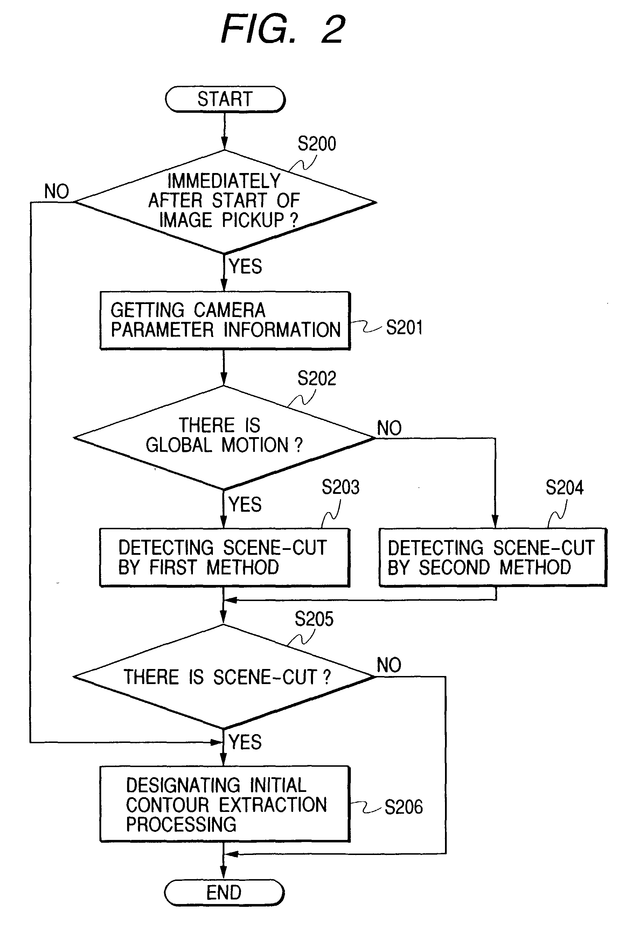

Determination operation of the determination unit 120 will be explained with reference to Fig. 2.

Fig. 2 is a flow chart showing determination operation of the determination unit 120.

The determination unit 120 determines whether the image processing apparatus is immediately after the start of image pickup (step S200). As the determination method, the determination unit 120 detects whether a recording start trigger switch has just been turned on.

If Yes in step S200, the process is advanced to step S206; and if No, to step S201.

In step S201, the determination unit 120 obtains from the camera unit 110 a parameter 11 for detecting the global motion (parameter 11 is, e.g., information from a gyrosensor and zoom information for determining the pan and tilt of the camera unit 110). Then, the process advances to step S202.

In step S202, the determination unit 120 determines from the parameter 11 obtained in step S201 whether there is a global motion, i.e., whether the video camera is at rest or moves (there is a motion such as pan or tilt).

If the determination unit 120 determines in step S202 that there is a global motion (camera unit 110 moves) (Yes), the process advances to step S203; and if No, to step S204.

In step S203, the determination unit 120 calculates information (sum of squares of differences between frames or the like) for detecting scene-cut (scene change) using the phase difference in position between frames (by correcting the global motion of the camera unit 110).

In step S204, the determination unit 120 calculates information (sum of squares of differences between frames or the like) for detecting scene-cut (scene change) without using the phase difference in position between frames.

In this manner, in step S203, the determination unit 120 corrects the motion of the video camera on the basis of the phase difference in position between frames, and gets information for detecting scene-cut (scene change). In step S204, the determination unit 120 gets information for detecting scene-cut (scene change) without using phase differences in position between frames. These two detection methods can suppress erroneous detection of a scene change caused by the motion of the camera unit 110.

If the determination unit 120 obtains information for detecting scene-cut (scene change) in step S203 or S204, it determines in step S205 from the obtained information whether scene-cut (scene change) has occurred.

If Yes in step S205, the process advances to step S206; and if No, the processing of the determination unit 120 ends.

In step S206, the determination unit 120 outputs to the information generation unit 130 the determination information 13 representing that processing for detecting the initial contour information 14 is required. Then, the processing of the determination unit 120 ends.

The information generation unit 130 generates and outputs the initial contour information 14 when, for example, the determination information 13 from the determination unit 120 represents that the initial contour information 14 must be newly detected, i.e., immediately after the start of image pickup or when a scene change is detected.

Generation processing of the initial contour information 14 by the information generation unit 130 will be explained.

Immediately after the start of image pickup or when a scene change is detected, the information generation unit 130 integrates information obtained by area division processing for a target image based on the color and texture (information output from the first area-division processing unit 131), and information obtained by area division processing for the target image based on motion information (motion vector), thereby generating the initial contour information 14 of the object of the target image. With this arrangement, the information generation unit 130 realizes processing which is executable for all the frames of a moving picture and can gain the initial contour of the object at a high speed.

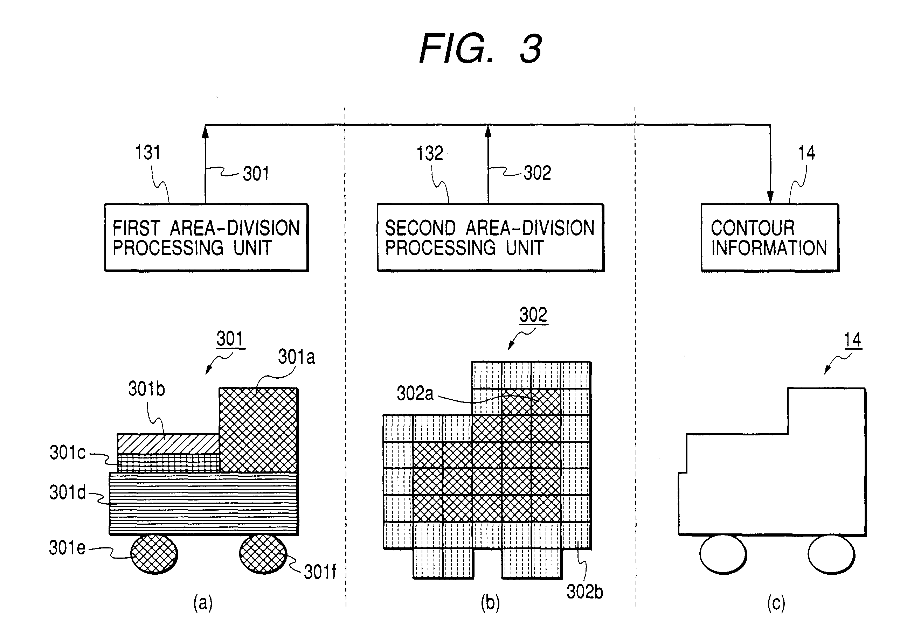

For example, assume that a target image is an image made up of an automobile portion serving as an object and a background portion, and initial contour information 14 of the automobile portion is to be acquired from the target image. In this case, a left figure (a) in Fig. 3 shows divided information 301 corresponding to the automobile portion that is obtained by the first area-division processing unit 131 for performing area division based on the color and texture. A central figure (b) in Fig. 3 shows divided information 302 corresponding to the automobile portion that is obtained by the second area-division processing unit 132 for performing area division based on motion information. A right figure (c) in Fig. 3 shows the initial contour information 14 generated from the information 301 obtained by the first area-division processing unit 131 and the information 302 obtained by the second area-division processing unit 132.

As shown in the figure (a) of Fig. 3, the first area-division processing unit 131 obtains the information 301 prepared by subdividing the automobile portion into areas 301a, 301b,..., 301f.

As shown in the figure (b) of Fig. 3, the second area-division processing unit 132 obtains the information 302 divided into three areas, i.e., a foreground area 302a having a large motion vector, a still background area (peripheral area of the following boundary area 302b), and the boundary area 302b having a different vector from those of the other two areas, on the basis of the magnitude of the motion vector when, for example, the motion vector is calculated by a known block matching method.

The integration processing unit 133 divides again areas not serving as the background area of the information 302 shown in the figure (b) of Fig. 3, i.e., the foreground area 302a and boundary area 302b, as a foreground area from the areas 301a, 301b,..., 301f represented by the information 301 shown in the figure (a) of Fig. 3. The integration processing unit 133 calculates the degrees of overlapping (overlap degrees) of the areas 301a, 301b,..., 301f which overlap the area 302a. An area having an overlap degree equal to or larger than a predetermined value is determined as one object portion which has the same motion as the area 302a. The integration processing unit 133 extracts the contour of the obtained area as the initial contour information 14 of the automobile portion (object portion).

Another generation processing of the initial contour information 14 by the information generation unit 130 will be described.

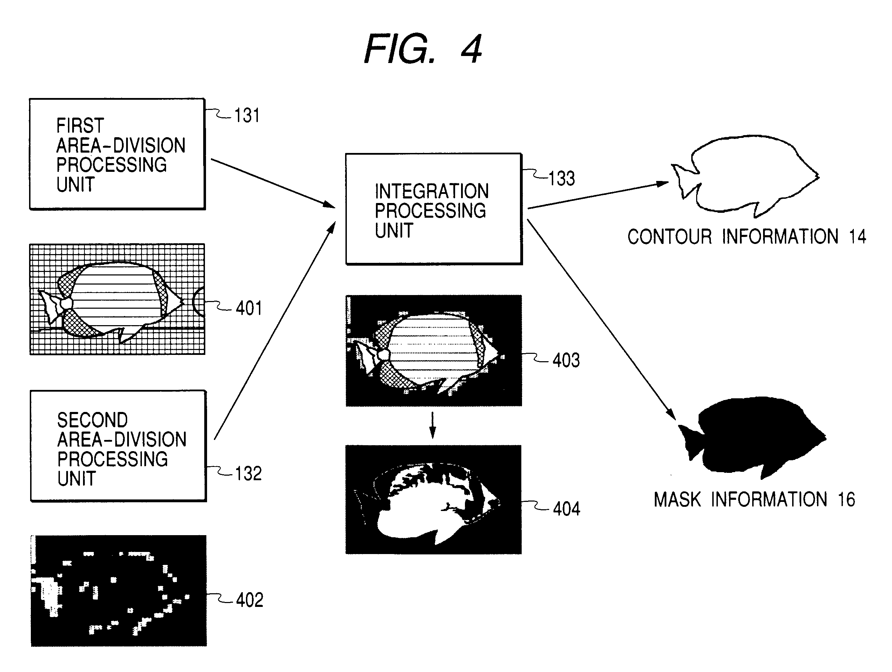

For example, assume that a target image is an image made up of a fish portion serving as an object and a background portion, and initial contour information 14 of the fish portion is to be acquired from the target image, as shown in Fig. 4. In this case, the first area-division processing unit 131 divides the target image into areas based on the color and texture, and acquires information 401 prepared by subdividing the background portion.

On the other hand, the second area-division processing unit 132 divides the target image into areas based on motion information, and acquires information 402 divided into three areas, i.e., a foreground area having a large motion vector, still background area, and boundary area having a different vector from those of the other two areas.

The integration processing unit 133 superposes the information 401 obtained by the first area-division processing unit 131 and the information 402 obtained by the second area-division processing unit 132 (represented by "403" in Fig. 4). When a given area divided by the first area-division processing unit 131 is not divided by the second area-division processing unit 132, the division result of the first area-division processing unit 131 is corrected to make the divided areas identical ("404" in Fig. 4). Then, the integration processing unit 133 generates the boundary between the corrected background area and the remaining area as the initial contour information 14.

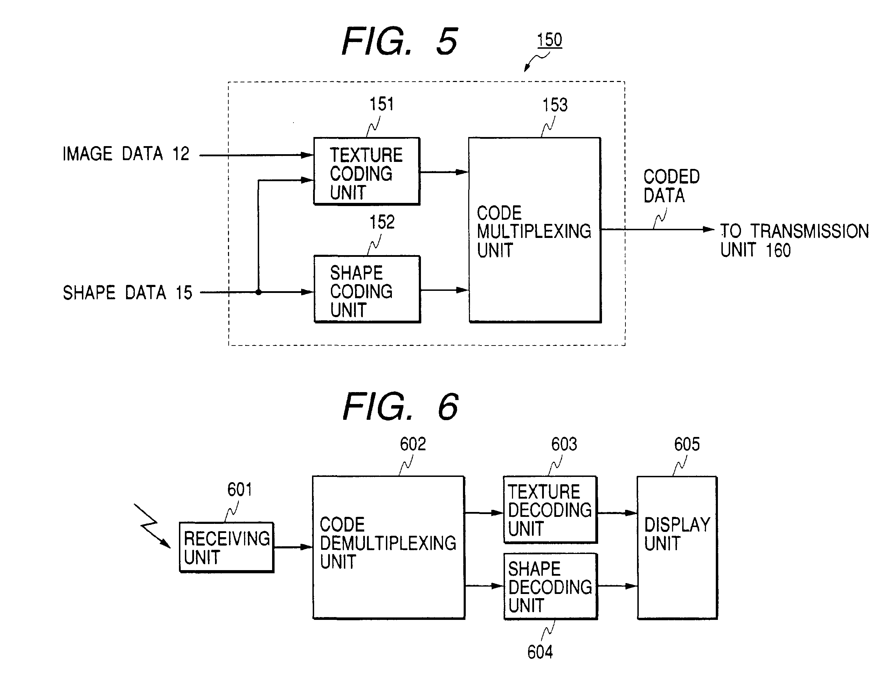

The coding unit 150 will be explained in detail with reference to Fig. 5.

The image data 12 generated by the camera unit 110 is input to a texture coding unit 151. The texture coding unit 151 cuts image data (luminance and color difference data) of each object on the basis of the shape data 15 generated by the tracking unit 140, and codes the image data for each object.

The shape data 15 generated by the tracking unit 140 is coded by a shape coding unit 152.

The coded data generated by the texture coding unit 151 and shape coding unit 152 are multiplexed by a code multiplexing unit 153, which outputs the multiplexed coded data to the transmission unit 160.

Note that the texture coding unit 151 and shape coding unit 152 execute coding complying with MPEG-4 (ISO/IEC 14496), details of which will be omitted.

An apparatus for reproducing coded data transmitted from the above-described image processing apparatus is shown in Fig. 6.

Fig. 6 is a block diagram showing the arrangement of an image reproducing apparatus according to the embodiment.

In Fig. 6, coded data transmitted by the transmission unit 160 (see Fig. 1) is received by a receiving unit 601, and supplied to a code demultiplexing unit 602. The code demultiplexing unit 602 demultiplexes the coded data into coded image data and coded shape data, and supplies the coded image data to a texture decoding unit 603 and the coded shape data to a shape decoding unit 604.

The texture decoding unit 603 decodes the coded image data, and supplies the decoded image data to a display unit 605. The shape decoding unit 604 decodes the coded shape data, and supplies the decoded shape data to the display unit 605. The display unit 605 displays the object image. At this time, a background image different from that in a picked-up image can be prepared, and composited with the object image to display the resultant image.

Determination processing of the determination unit 120 may be done as follows.

The determination unit 120 monitors the appearance of a new object. Only when a new object appears as a result of monitoring, the information generation unit 130 generates the initial contour information 14.

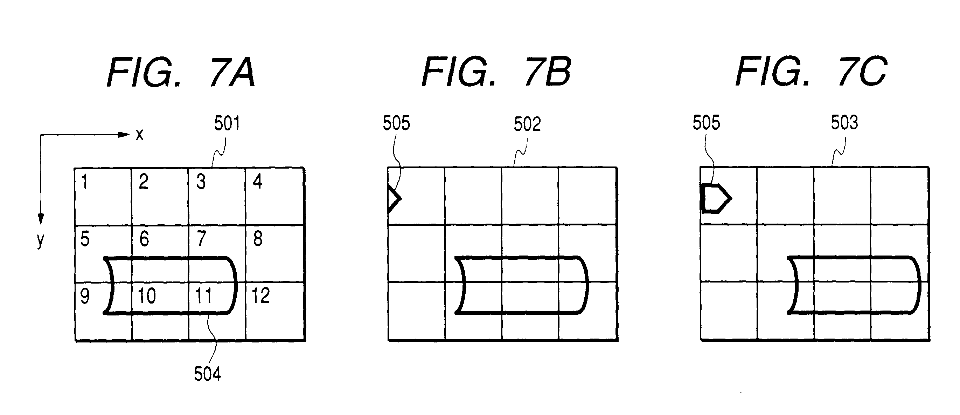

Figs. 7A to 7C show monitoring processing of the determination unit 120 for the appearance of a new object.

Images 501 to 503 shown in Figs. 7A to 7C respectively represent frames of a moving picture at an equal interval in the time direction.

For descriptive convenience, assume that one arbitrary object 504 has been tracked up to the frame 501 in Fig. 7A, and a new object 505 appears in the frames 502 and 503 in Figs. 7B and 7C.

As shown in Fig. 7A, the search start determination unit 120 divides the entire target frame 501 into tiles of M x N pixels (in this case, 4 x 3 in the horizontal and vertical directions), and detects tiles with which the object 504 does not overlap, thereby recognizing the position of the object 504.

The determination unit 120 calculates the differences between the frame 501 and the frames 502 and 503 for each tile. As for a frame having the largest difference value, i.e., frame 503, the determination unit 120 supplies to the information generation unit 130 the determination information 13 representing that processing for detecting the initial contour information 14 is required.

Accordingly, the information generation unit 130 generates and outputs the initial contour information 14 only when information set in the determination information 13 from the determination unit 120 represents acquisition of the initial contour information 14, i.e., only when a new object appears.

The object of the present invention is achieved even by supplying a storage medium which stores software program codes for realizing the functions of a host and terminal according to the above-described embodiment to a system or apparatus, and causing the computer (or the CPU or MPU) of the system or apparatus to read out and execute the program codes stored in the storage medium.

In this case, the program codes read out from the storage medium realize the functions of the above-described embodiment, and the storage medium which stores the program codes constitutes the present invention.

As a storage medium for supplying the program codes, a ROM, floppy disk, hard disk, optical disk, magnetooptical disk, CD-ROM, CD-R, magnetic tape, nonvolatile memory card, or the like can be used.

The functions of the above-described embodiment are realized not only when the computer executes the readout program codes, but also when an OS or the like running on the computer performs part or all of actual processing on the basis of the instructions of the program codes.

The functions of the above-described embodiment are also realized when the program codes read out from the storage medium are written in the memory of a function expansion board inserted into the computer or that of a function expansion unit connected to the computer, and the CPU of the function expansion board or function expansion unit performs part or all of actual processing on the basis of the instructions of the program codes.

As has been described above, according to the embodiment, initial contour information of an object is acquired on the basis of any result of detection of a change in object (detection of a scene change or the appearance of a new object) and detection of that it is immediately after the start of image pickup, when separating or cutting an object present in a target image from the background.

In acquiring the initial contour information, an area obtained by area division based on the color and texture and an area obtained by area division based on motion information (motion vector) are integrated, and the contour of the integrated area is used as initial contour information.

This arrangement enables acquiring initial information to be used to separate or cut an object present in a target image from the background when a scene change or the appearance of a new object is detected, or immediately after the start of image pickup. Thus, processing of automatically extracting an object portion from a target image can be accurately performed at a high speed.

In other words, the foregoing description of embodiments has been given for illustrative purposes only and not to be construed as imposing any limitation in every respect.

The scope of the invention is, therefore, to be determined solely by the following claims and not limited by the text of the specifications and alternations made within a scope equivalent to the scope of the claims fall within the true spirit and scope of the invention.

**Claims**

1.  An image processing apparatus, comprising:

    a) input means for inputting successive image data;
    b) detection means for detecting a change in the image data;
    c) generation means for generating initial contour information for extracting an object present in the image data in accordance with an output from said detection means; and
    d) extraction means for extracting object image data corresponding to the object on the basis of the initial contour information generated by said generation means.

2.  An apparatus according to claim 1, further comprising coding means for coding the object image data extracted by said extraction means.

3.  An apparatus according to claim 2, further comprising transmission means for transmitting the image data coded by said coding means.

4.  An apparatus according to claim 1, wherein the image data input by said input means include data picked up by a video camera, said input means inputs parameter data concerning a camera parameter of the video camera, and said detection means detects a change in image based on the parameter data.

5.  An apparatus according to claim 4, wherein said detection means performs different detection processing in accordance with the parameter data.

6.  An apparatus according to claim 4, wherein said input means includes the video camera.

7.  An apparatus according to claim 1, wherein said generation means includes first area-division means for performing area division based on a color and texture, and second area-division means for performing area division based on motion of image data, and generates the initial contour information in accordance with outputs from said first and second area-division means.

8.  An apparatus according to claim 7, further comprising display means for displaying image data input by said input means, wherein said display means can display an extraction result of said extraction means so as to visually check the extraction result.

9.  An apparatus according to claim 2, wherein said coding means performs coding processing complying with MPEG-4 (ISO/IEC 14496).

10. An apparatus according to claim 2, further comprising recording means for recording image data coded by coding means on a recording medium.

11. An image processing method comprising the steps of:

    a) inputting successive image data;
    b) detecting a change in the image data;
    c) generating initial contour information for extracting an object present in the image data in accordance with a detection result of the detection step; and
    d) extracting object image data corresponding to the object on the basis of the generated initial contour information.

12. A storage medium which stores program codes of the image processing steps, wherein the storage medium stores:

    a) a code of the input step of inputting successive image data;
    b) a code of the detection step of detecting a change in the image data;
    c) a code of the generation step of generating initial contour information for extracting an object present in the image data in accordance with a detection result of the detection step; and
    d) a code of the extraction step of extracting object image data corresponding to the object on the basis of the initial contour information generated in the generation step.

# FIG. 1

EP 1 117 262 A2

# FIG. 2

```
                    ┌──────────┐
                    │  START   │
                    └────┬─────┘
                         │            S200
                         ▼
                    ╱─────────────╲
          NO   ╱   IMMEDIATELY      ╲
        ◄─────┤   AFTER START OF     ├
              ╲   IMAGE PICKUP ?    ╱
                    ╲─────────────╱
                         │ YES
                         ▼
              ┌────────────────────┐
              │ GETTING CAMERA     │  S201
              │ PARAMETER INFORMATION │
              └──────────┬─────────┘
                         │         S202
                         ▼
                   ╱───────────╲          NO
                  ╱  THERE IS    ╲───────────────┐
                  ╲ GLOBAL MOTION?╱              │
                   ╲───────────╱                 │
                      │ YES    S203              │ S204
                      ▼                          ▼
           ┌────────────────────┐    ┌────────────────────┐
           │ DETECTING SCENE-CUT│    │ DETECTING SCENE-CUT│
           │ BY FIRST METHOD    │    │ BY SECOND METHOD   │
           └──────────┬─────────┘    └─────────┬──────────┘
                      │◄───────────────────────┘
                      │        S205
                      ▼
                ╱──────────────╲         NO
               ╱ THERE IS SCENE-╲──────────────┐
               ╲    CUT ?       ╱               │
                ╲──────────────╱                │
                      │ YES                     │
                      ▼                         │
           ┌────────────────────┐               │
           │ DESIGNATING INITIAL│               │
           │ CONTOUR EXTRACTION │  S206         │
           │ PROCESSING         │               │
           └──────────┬─────────┘               │
                      │◄──────────────────────┘
                      ▼
                 ┌─────────┐
                 │   END   │
                 └─────────┘
```

EP 1 117 262 A2

# FIG. 3

| FIRST AREA-DIVISION PROCESSING UNIT | SECOND AREA-DIVISION PROCESSING UNIT | CONTOUR INFORMATION |

131 — 301

132 — 302

14

(a)

(b)

(c)

# FIG. 4

FIRST AREA-DIVISION PROCESSING UNIT ~131

401

SECOND AREA-DIVISION PROCESSING UNIT ~132

402

INTEGRATION PROCESSING UNIT ~133

403

404

CONTOUR INFORMATION 14

MASK INFORMATION 16

EP 1 117 262 A2

## FIG. 5

IMAGE DATA 12 → **TEXTURE CODING UNIT** (151) → **CODE MULTIPLEXING UNIT** (153) → CODED DATA → TO TRANSMISSION UNIT 160

SHAPE DATA 15 → **SHAPE CODING UNIT** (152) → **CODE MULTIPLEXING UNIT** (153)

(150)

## FIG. 6

→ **RECEIVING UNIT** (601) → **CODE DEMULTIPLEXING UNIT** (602) → **TEXTURE DECODING UNIT** (603) → **DISPLAY UNIT** (605)

**CODE DEMULTIPLEXING UNIT** (602) → **SHAPE DECODING UNIT** (604) → **DISPLAY UNIT** (605)

EP 1 117 262 A2

EP 1 117 262 A2

## FIG. 7A

501

504

## FIG. 7B

505    502

## FIG. 7C

505    503